Europäisches Patentamt

**European Patent Office**

**Office européen des brevets**

(11) Publication number: **0 028 211**

**A1**

## EUROPEAN PATENT APPLICATION

(21) Application number: **80850160.5**

(22) Date of filing: **23.10.80**

(51) Int. Cl.³: **F 03 B 15/14**

(30) Priority: **26.10.79 SE 7908876**

(43) Date of publication of application: **06.05.81**
**Bulletin 81/18**

(84) Designated Contracting States: **CH DE FR GB LI SE**

(71) Applicant: **Hansson, Hans-Erik, Dunderbacksvägen 14, S-612 00 Finspang (SE)**

(72) Inventor: **Hansson, Hans-Erik, Dunderbacksvägen 14, S-612 00 Finspang (SE)**

(74) Representative: **Nilsson, Karl et al, Stenhagen Patentbyra AB Karlavägen 18, S-114 31 Stockholm (SE)**

(54) **A hydro-electric power station.**

(57) A hydro-electric power station including a turbine (2, 6) having connected thereto a machine housing (5) for accommodating a generator driven by said turbine has a float arrangement (8, 9) located in a water reservoir for said station, above the inlet of said turbine, connected to adjustable guide vanes (16) of the turbine in a manner such as to adjust the setting of said vanes, and therewith the flow of water through the turbine and the power developed thereby, in dependence on the level of the water in said reservoir.

ACTORUM AG

# A HYDRO-ELECTRIC POWER STATION

The present invention relates to a hydro-electric power station including a turbine having connected thereto a machine housing for accommodating a generator driven by said turbine.

An object of the invention is to provide a simple and inexpensive hydro-electric power station by which the potential power of, in particular, small waterways can be utilized in an extremely beneficial manner.

To this end the hydro-electric power station according to the invention is mainly characterized in that a float arrangement located in a water reservoir for said station, above the inlet of said turbine, is connected to adjustable guide vanes of the turbine in a manner such as to adjust the setting of said vanes, and therewith the flow of water through the turbine and the power developed thereby, in dependence on the level of the water in said reservoir.

In accordance with one embodiment of the invention the float arrangement conveniently comprises a float which is connected to respective guide vanes by connecting means, preferably in the form of lines or links. The guide vanes are adjustable by rotation about a given axis, and said connecting means are connected to said vanes at locations thereon which are spaced from the axis of rotation of said vanes.

To pre-bias the vanes in a turbine inlet closing direction, the axis of rotation of each of the guide vanes is conveniently spaced from the centre of the load exerted on the vanes by the water flowing through the turbine, and the connecting means are arranged to engage respective guide vanes on the same side of the axis of vane rotation as that on which said load centre lies.

The guide vanes are conveniently arranged for rotation between a position in which they at least substantially close the turbine inlet, thereby preventing the inflow of water to the turbine when said turbine is to be shut off, and positions in which said inlet is open, these positions being dependent upon the level of the water in the reservoir.

It will be understood that should the turbine begin to race, as a result of a mechanical or electrical fault, e.g., it is necessary for the vanes to move to the turbine closing position as rapidly as possible. In this respect buoyancy of the float should not be such as to prevent rapid closing of the vanes. Accordingly, in one advantageous embodiment of the invention the float influencing the setting of the guide vanes has a buoyancy which is insufficient to hold the vanes in a turbine-inlet opening position, in the event of the turbine racing.

Suitably, an inlet part of the turbine housing surrounding the turbine rotor has the form of a valve seat and the float arrangement comprises a single float in the form of an annular valve body. When occupying a lower position, the valve body seals against said inlet part and forms a free connection between the turbine and atmosphere. In an upper position, in which said float floats on the surface of the water reservoir, said float forms means for the aforementioned adjustment of the guide-vane setting.

Alternatively, the float arrangement may comprise two floats. Thus, in a further advantageous embodiment of the invention an inlet part of the turbine housing surrounding the turbine rotor has the form of a valve seat and the float arrangement comprises inner and outer, mutually concentric floats, of which the outer float forms an annular valve body which in a lower position seals against said inlet part and forms a free connection between the turbine and atmosphere, and in an upper position, in which it floats on the surface of the water reservoir, uncovers said inlet to permit substantial free flow of water through the turbine. The inner float is connected to said adjustable guide vanes for adjusting the setting thereof, in dependence upon the level of water in the reservoir.

The machine housing of the power station according to the invention is preferably of elongate configuration, and extends substantially vertically, said housing being encircled by the annular float through which the vane setting is influenced, and forming a guide for said float. The float or floats is or are preferably divided into at least three chambers, and the turbine rotor is conveniently journalled in the lower part of the machine housing.

So that the invention will be more readily understood and further features thereof made apparent, exemplary embodiments of the invention will now be described with reference to the accompanying schematic drawing, in which

Figure 1 is a sectional view of a first embodiment of a hydro-electric power station according to the invention,

Figure 2 is a part sectional view of a second embodiment of a power station according to the invention, and

Figure 3 is a sectional view of a third embodiment of a power station according to the invention.

In the various figures of the drawing, like elements have been identified with like references.

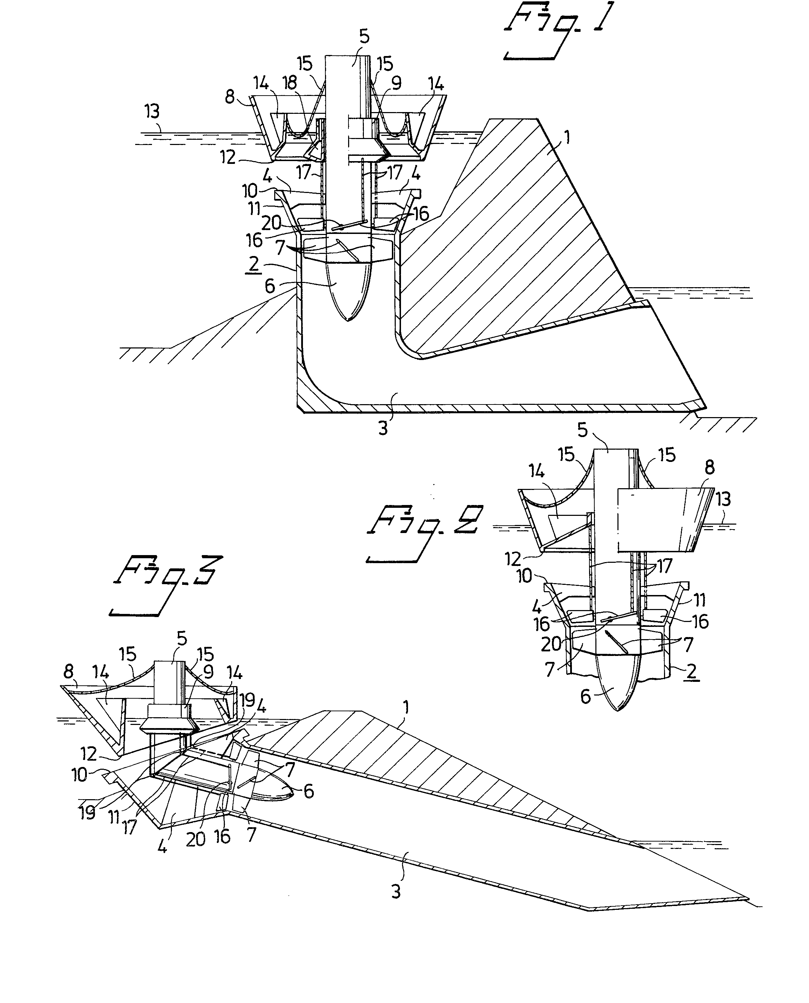

Referring first to the Figure 1 embodiment, there is illustrated schematically a dam structure 1 in which there is arranged a turbine housing shown generally at 2 which, in this embodiment, is of elongate configuration and extends vertically. As shown, the turbine housing 2 communicates with an at least substantially horizontal suction pipe 3. Supported in the turbine housing 2 by means of a number of supports 4 is a machine housing 5 for, inter alia, accommodating a generator (not shown). The support 4 are of a plate-like construction and may be slightly inclined to the vertical, or curved, so as to impart a favourable flow direction to the inflowing water.

Journalled in the lower part of the machine housing 5 is a turbine rotor 6 having turbine rotor blades 7 and being drivingly connected to the aforementioned generator (not shown). It should be mentioned here that the hydroelectric power station according to the invention can be used effectively in installations where the water head is relatively low. In such cases the rotary speed of the turbine will also be relatively low and hence it may be an advantage to incorporate a two-stage epicyclic gear (not shown) between the turbine rotor 6 and said generator, thereby to obtain high generator speeds with a generator of but small dimensions.

In the embodiment of Figure 1, there is arranged around the upper part of the machine housing 5 a float arrangement comprising an annular outer float 8 and an annular inner float 9 which are open at the top thereof, said inner float being concentric with the outer float. The end surface 10 of the turbine housing inlet 11 is designed as a valve seat, while the outer float 8 is arranged for movement between a lower position, in which the bottom surface 12 of said float seals against the end surface 10 of said inlet 11, where because of its annular shape said float 8 forms a free connection between the turbine and atmosphere, and an upper position in which said float 8 floats on the surface 13 of a water reservoir and uncovers said inlet 11, to permit a substantially free flow of water through the turbine. Thus, the outer float 8 forms an annular valve body, or dam gate, which encircles the machine housing 5 and the inner float 9 and which when occupying said lower position, in sealing engagement with the valve-seat surface 10, shuts the turbine down.

Downward movement of the outer float 8 may be effected by filling the interior thereof with water, so that said float loses its buoyancy, and sinks down onto the valve seat 10. To provide for buoyancy stability and prevent tilting of the float 8 the interior of said float may be divided into three or more compartments by partitions 14 Although not shown, it will be understood that the float 9 may be provided with partitions in a similar manner. The float 8 is suitably controlled by a number of, for example, wires 15, and may be guided during its movement between said positions by the machine housing 5 and/or by said wires, the length of which is preferably such that said wires 15 are fully extended when the outer float 8 occupies its turbine shut-down position. As will be understood, when re-starting the turbine after a shut-down, the buoyancy of the float 8 is restored by emptying the float 8. The means for filling and emptying the float interior have not been shown.

The inner float 9 forms a means for adjusting the setting of guide vanes 16 arranged in the inlet part 11 of the turbine housing 2. Each of the vanes is arranged for rotation about a given axis 20, between a position in which the turbine inlet 11 is substantially closed and positions in which said inlet is open to correspondingly different extents. The axis 20 of rotation of respective vanes is located at a distance from the centre of the forces exerted on the vanes by the water flowing through the turbine, so that said water produces a torque which strives to rotate the guide vanes 16 towards said turbine-closing position, against the buoyancy force of the float 9. The inner float 9 is connected to respective guide vanes 16 by elongate connecting means 17, which may have the form of wire ropes, links or like elements. As indicated in the drawing, each of the connecting means 17 is connected to its respective vane 16 at a location thereon which is spaced from the axis 20 of rotation of said vane and which lies on the same side of said axis as said force centre.

In normal operation, the turbine output is controlled by the inner float 9. When the flow of water to the reservoir decreases or increases, the water level 13 will fall or rise, causing the distance between the inner float 9 and rotary axis 20 the guide vanes 16 to change, thereby to adjust the setting of the vanes in response thereto, via the connecting means 17, so that the flow of water through the turbine decreases or increases until a new state of equilibrium is reached. Thus, the prevailing setting of the guide vanes 16 is dependent to a large extent on the level 13 of water in the reservoir, but also on the load exerted by the generator .

In the illustrated embodiment, the inner float 9 comprises a chamber 18, into which water can be poured so as to cause the float 9 to lie more deeply in the water of the reservoir,whereby the vanes 16 will move to a partially closing position and the level of the surface 13 will rise until equilibrium is reached, thereby increasing the volume of water in the reservoir.

As will be understood from the aforegoing, because the axis 20 of rotation of respective vanes 16 is spaced from the resultant of the forces exerted on the vanes, i.e. the force or load centre, and because the inner float 9 is connected to respective vanes 16 at locations which lie on the same side of said axis of rotation as said force centre, the vanes are pre-biased in a turbine-inlet closing direction. As before mentioned, the buoyancy of the inner float 9, i.e. the float operative to change the vane settings, should not be such as to prevent the vanes being rotated to a closing position by the force of the water acting thereon should the turbine begin to race, but shall be so constructed that the force acting on the vanes, when the turbine races is able to fully submerge the float 9 which then becomes water-filled. As a result hereof the float is unable to rise and the vanes 16 remain in turbine-inlet closing position until the buoyancy of the float 9 is restored.

In the embodiment illustrated in Figure 2, all the elements of the power station are identical with those described with reference to Figure 1, with the exception that in this case the float arrangement comprises only one float, referenced 8 in the Figure. Thus, the float 8 combines the functions of the inner and outer floats 8 and 9 of the Figure 1 embodiment, to form an annular valve body for seating against the surface 10 of inlet 11 of the turbine housing 2, and to form a means for adjusting the setting of the guide vanes 16. Thus, in a lower position, to which it is moved by filling the interior with water, the float 8 seals against said inlet and forms a free connection between the turbine and atmosphere, while when occupying an upper position, in which it floats on the surface 13 of the reservoir, it forms said means for adjusting the vane setting.

In some cases it may not be possible, or convenient, for the turbine housing 2 to be arranged vertically in the dam structure 1, but that for some reason or other said housing must be inclined to the vertical.

One such embodiment is illustrated in Figure 3. In this case the bottom surface 12 of the float 8 forming the annular valve body is shaped to conform to the configuration of the valve-seat surface 10 formed on the ilet part 11 of the turbine housing 2, and the elongate connecting means connecting float 9 to the adjustable guide vanes 16 are bendable and extend over direction-changing means, as shown at 19.

It should be emphasized that effective adjustment of the guide vane setting can be optimized by appropriate selection of the float-buoyancy factors, e.g. the shape and volume of the float and the amount of water poured thereinto.

0028211

CLAIMS

1. A hydro-electric power station including a turbine(2,6) having connected thereto a machine housing (5) for accommodating a generator driven by said turbine, characterized in that a float arrangement (8, 9) located in a water reservoir for said station, above the inlet (11) of said turbine, is connected to adjustable guide vanes (16) of the turbine (2, 6) in a manner such as to adjust the setting of said vanes, and therewith the flow of water through the turbine and the power developed thereby, in dependence on the level of the water in said reservoir.

2. A power station according to claim 1, characterized in that each of said guide vanes 16 is adjustable by rotation about a given axis (20), and in that said float arrangement (8, 9) comprises a float which is connected via connecting means (17), preferably in the form of lines or links, to respective ones of said guide vanes at locations thereon which are spaced from the axis of rotation of respective vanes.

3. A power station according to claim 2, characterized in that said axis (20) of rotation of each of said guide vanes (16) is spaced from the centre of the load exerted on the vanes by the water flowing through the turbine (2, 6), and in that said connecting means (17) engage respective guide vanes on the same side of the axis of vane rotation as that on which said load centre lies.

4. A power station according to claim 2 or 3, characterized in that said guide vanes (16) are arranged for rotation between a position in which they at least substantially close the turbine inlet (11) and positions in which said inlet is open.

5. A power station according to claim 4, characterized in that the float (8, 9) influencing the setting of the guide vanes (16) has a buoyancy which is insufficient to hold the vanes in turbine inlet opening position in the event of the turbine racing.

6. A power station according to any one of claims 1 - 5, characterized in that an inlet part (10) of a turbine housing (2) surrounding the turbine rotor (6) is designed as a valve seat, and in that the float arrangement comprises a single float (8) in the form of an annular valve body which in a lower position seals against said inlet part (10) and forms a free connection between the turbine (2, 6) and atmosphere, and in an upper position, in which it floats on the surface (13) of the water reservoir, forms means for said adjustment of the guide vane setting.

7. A power station according to any one of claims 1 - 5, characterized in that an inlet part (10) of a turbine housing (2) surrounding the turbine rotor (6) is designed as a valve seat, and in that the float arrangement comprises inner and outer mutually concentric floats (8, 9) of which the outer float (8) forms an annular valve body which in a lower position seals against said inlet part (10) and forms a free connection between the turbine (2, 6) and atmosphere, and in an upper position, in which it floats on the surface (13) of the water reservoir, uncovers said inlet to permit substantially free flow of water through the turbine, and the inner float (9) is connected to said adjustable guide vanes (16) for adjusting the setting thereof.

8. A power station according to claim 6 or 7, characterized in that the machine housing (5) is elongate and extends substantially vertically, said housing being encircled by the annular float (8, 9) through which the vane setting is influenced, and forming a guide for said float.

9. A power station according to any one of the preceding claims, characterized in that the turbine rotor (6) is journalled in the lower part of the machine housing (5).

10. A power station according to any one of claims 2 - 9, characterized in that the float (8, 9) is or are divided into at least three chambers.

1/1

0028211

Fig.1

Fig.2

Fig.3

European Patent
Office

**EUROPEAN SEARCH REPORT**

| | **DOCUMENTS CONSIDERED TO BE RELEVANT** | | **CLASSIFICATION OF THE APPLICATION (Int. Cl.³)** |
|---|---|---|---|
| Category | Citation of document with indication, where appropriate, of relevant passages | Relevant to claim | |
| | GB - A - 400 394 (ENGLISH ELECTRIC COMPANY) <br><br> * Page 2, lines 36-87 * <br><br> -- | 1 | F 03 B 15/14 |
| | FR - A - 619 598 (CROZET FOUR-NEYRON) <br><br> * Page 1, line 50 - page 2, line 104 * <br><br> -- | 1 | |
| | GB - A - 1 054 962 (FORGES ET ATELIERS DU CREUSOT) <br><br> * Page 1, line 82 - page 2, line 124 * <br><br> ---- | 1 | **TECHNICAL FIELDS SEARCHED (Int. Cl.³)** <br><br> F 03 B |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-12-1980 | DE WINTER |

EPO Form 1503.1   06.78